# EUROPEAN PATENT SPECIFICATION

(11) **EP 1 654 852 B1**
(45) Date of publication and mention of the grant of the patent: **02.04.2008**
(21) Application number: 04741609.4
(22) Date of filing: 19.05.2004
(51) Int. Cl.: H04L 29/06

(54) **SYSTEM AND METHOD FOR AUTHENTICATING CLIENTS IN A CLIENT-SERVER ENVIRONMENT**
VERFAHREN UND SYSTEM ZUR BENUTZERAUTHENTIFIZIERUNG IN EINER BENUTZER-ANBIETERUMGEBUNG
SYSTEME ET PROCEDE D'AUTHENTIFICATION DE CLIENTS DANS UN ENVIRONNEMENT CLIENT-SERVEUR

(30) Priority: 11.07.2003 EP 03102111
(43) Date of publication of application: 10.05.2006
(73) Proprietor: International Business Machines Corporation, Armonk, NY 10504 (US)
(72) Inventor: HAGMEIER, Joachim, 70176 Stuttgart (DE); BRUCHLOS, Joachim, 75365 Calw (DE); KUSSMAUL, Timo, 71034 Boeblingen (DE)
(74) Representative: Klein, Hans-Jörg
(86) International application number: PCT/EP2004/050864
(87) International publication number: WO 2005/006703

(56) References cited:
- US-A1- 2002 133 700
- US-A1- 2003 084 304

## Description

### Field of the present invention

The present invention relates to authentication in general, and in particular to authentication in a client-server environment, and more specifically to authentication of clients in the Internet.

### Background of the invention

Authentication is a procedure of determining whether someone or something is, in fact, who or what it is declared to be. In private and public computer networks authentication is commonly done by the use of logon passwords. Typically, every server maintains its own data persistency in order to store authentication data. Therefore, passwords which are available to the client on one server, may be already blocked by another client on another server. This increases the number of different authentication sets which have to be remembered and maintained by the client. In applications that are distributed over several servers with different user authentication systems (e.g. accessing an application through a portal server where the portal server uses its own user database) the client would have to logon more than once.

Workarounds to allow single signon contain approaches like storing logon data for the application servers on the portal server or the use of centralized user databases like Microsoft's® .NET Passport (http://www.passport.com) or Liberty from the Liberty Alliance (http://www.projectliberty.org). This requires that the client is willing to have personal data stored on a third party site with all the data security issues that come along with this approach. Also if the Passport service should be down one cannot logon to the desired service even if the site one wants to use is available.

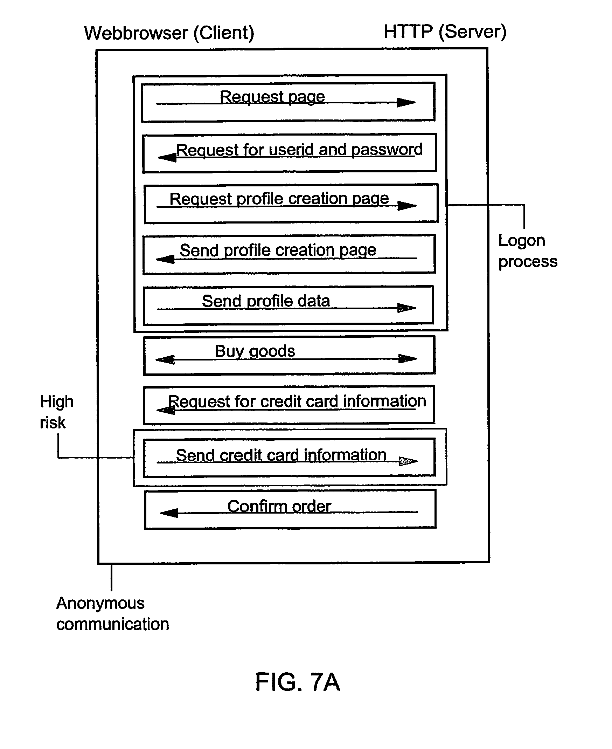

Using a user ID/password set for authentication also has the disadvantage that it results in extra network traffic. On a client request the server has to answer by asking for the login data. Only after this is provided, the originally requested information is sent back to the client (see also Fig. 7A below) .

Finally, passwords can often be stolen, accidentally revealed, or simply forgotten.
For this reason, Internet business and many other transactions require a more stringent authentication process. The use of digital certificates issued and verified by a Certificate Authority (CA) as part of a public key infrastructure is considered to become the standard way to perform authentication on the Internet.
Digital signatures enable the recipient (server) to verify the identity of the sender (client) and the origin as well as the integrity of the document.
Digital signatures are based on asymmetric cryptographic algorithms. The documents are signed with the private key of the sender. The recipient can take the sender's public key, which is provided to him by a Trusted Third Party, and validate the integrity of the document received.
The implementation of a digital signature procedure into an already existing password logon infrastructure requires great modifications on the server side as well as the client side, e.g. additional card reader with specific security applications. Therefore, such implementations cause much effort on costs and time with the consequences that preferably only new client-server infrastructures will be using the digital signature procedure. The existence of those two authentication procedures in the client-server environment has the disadvantage that a client has to check at first whether the destination server is supporting the password logon or the digital signature procedure. Depending on that result the client will use the required authentication process supported by the server. It causes much unnecessary network traffic between client and server since the server application itself finally determines the type of authentication.
Furthermore, the present digital signature authentication procedures have the disadvantage that several screens between client and server have to be exchanged between client and server until the client can provide its authentication information.
This causes much unnecessary network traffic.

US2002/0133700 A1 discloses a method and system for communicating a certificate between a security module and a server. The problem posed by the present invention is the lack of means for communicating a certificate from a client between a security module and a server, the protocol used between the client and the server being HTTP or an equivalent protocol, a security protocol like SSL or an equivalent protocol being implemented between the client and the security module. It offers a method and a device for communicating said certificate from the module to the server, which consists of inserting said certificate into a cookie header of a request in HTTP or an equivalent protocol sent by the client.

### Object of the invention

starting from this, the object of the present invention is to provide a method and system for authenticating clients in a client-server environment by avoiding the disadvantages of the above-mentioned prior art.

### Brief summary of the invention

The idea of the present invention is to replace the existing password/user ID based authentication process by a new digital signature authentication process in which preferably the first HTTP-request header is extended by the client authentication information independently of the authentication process used by the destination server and without server requesting authentication information. The authentication information preferably includes the client certificate containing the client public key, signed by certification authority, and preferably a hash value calculated over the HTTP-request header data being sent in the request, and encrypted with the Client's private key. The certificate and digital signature may be added during the creation of the HTTP-request header in the client system itself, or may be added later in a server acting as a gateway, proxy, or tunnel.

A destination server that does not support the new digital signature authentication process will simply ignore the certificate and digital signature in the HTTP-request header and will automatically initiate its own authentication process. The present invention simplifies the existing digital signature authentication process and concurrently allows the coexistence of different authentication processes without changing the HTTP-protocol or causing unnecessary network traffic.

### Brief Description of the several views of the drawings

The above, as well as additional objectives, features and advantages of the present invention will be apparent in the following detailed written description.

The novel features of the invention are set forth in the appended claims. The invention itself, however, as well as a preferred mode of use, further objectives, and advantages thereof, will be best understood by reference to the following detailed description of an illustrative embodiment when read in conjunction with the accompanying drawings, wherein:
Fig.1 A/B show prior art HTTP-client-server environments in which the present invention is preferably used,
Fig.2 shows the basic structure of a typical prior art HTTP-header,
Fig.3 shows the inventive structure of the HTTP-header with the certificate and the digital signature,
Fig.4 A-D show preferred embodiments to insert the certificate together with the digital signature into the HTTP-request header resulting in the inventive structure of the HTTP-request header,
Fig.5 shows an example of a server-client communication environment using the present invention,
Fig.6 shows a preferred embodiment of the authentication data flow in an client-server environment according to Fig.1 A using the inventive structure of the HTTP-request, and
Fig.7 A, B show a comparison of the prior art authentication process with the inventive authentication process of the present invention based on an example of a online purchase transaction process.

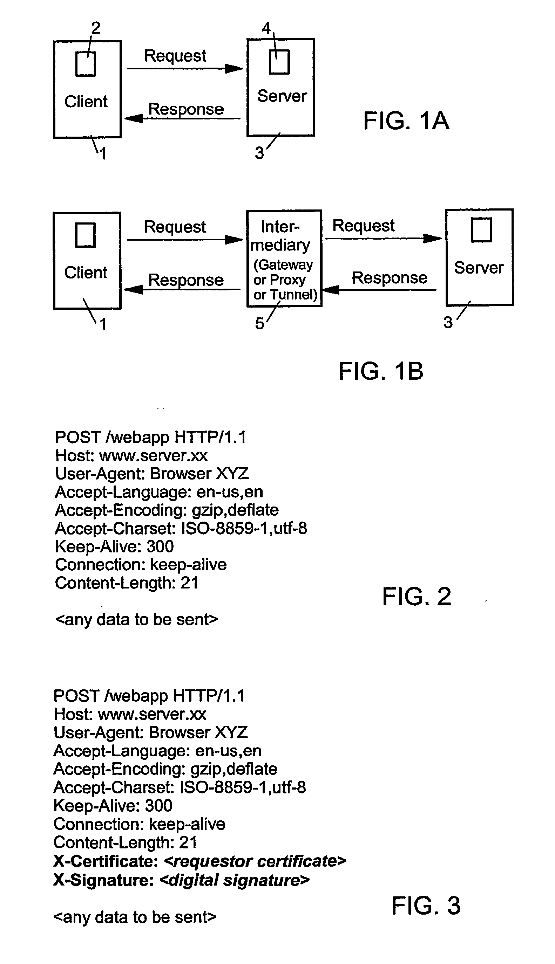

With reference to Fig.1 A and Fig.1 B, there are depicted client-server environments in which the present invention is preferably used. However it should be noted that the present invention may be used on each client-server environment using communication protocols allowing header extensions without violating normal protocol usage. Therefore, the present invention with its preferred embodiments will be described and explained on the currently mostly known HTTP-protocol.

The HTTP-protocol (Hypertext Transfer Protocol) is an application level protocol for distributed systems. It is a set of rules for exchanging files (text, graphic, images, sound, video, and other multimedia files). Any web server machine 3 contains a HTTP-daemon or so called HTTP-server 4, a program that is designed to wait for HTTP-requests and handle them when arrive. Furthermore, each client machine 1 contains a web browser or so-called HTTP-client 2, sending requests to web server machine 3. When the browser user enters a request by either opening a web file (typing in a URL) or clicking on a hypertext link, the browser builds an HTTP-request and sends it to the Internet Protocol Address indicated in the URL. The HTTP-server 4 in the destination server machine 3 receives the request and, after processing, the requested file is returned. In another client-server environment client 1 is communicating with the server 3 via a gateway, a tunnel, or a proxy-server 5 (see Fig.1 B).

Usually HTTP takes place over TCP/IP (Transmission Control Protocol/Internet Protocol), however HTTP is not dependent on TCP/IP.

TCP defines a set of rules to exchange messages with other Internet points at the information package level, and IP defines a set of rules to send and receive messages at the Internet address level.

An HTTP-request header consists of the HTTP method (GET, HEAD, POST, etc.), the Universal Resource Identifier (URI), the protocol version and optional supplemental information.

An HTTP-response consists of a status line, which indicates success or failure of the request, a description of the information in the response (meta information) and the actual information request.

With respect to Fig.2, there is depicted the basis structure of a prior art HTTP-request header. Each HTTP-request must contain at least a header. Only HTTP-Post requests contain header and body data. Following information are preferably contained in a HTTP-request header:
Resources to be accessed by the HTTP-request (e.g. file, servlet)

The host name of the server (e.g. www.ibm.com) Browser name and version (e.g. Netscape Version 7.1) Operating system of the client (e.g. Windows XP) Character set that can be understood by the browser (e.g. iso-8859-1).

Each HTTP-header may include supplemental information not defined by the HTTP-protocol and which does not conflict with existing applications using the HTTP-protocol. That means that an application which uses the HTTP-protocol and which is not configured to process that supplemental information simply ignores that supplemental information without interrupting its execution.

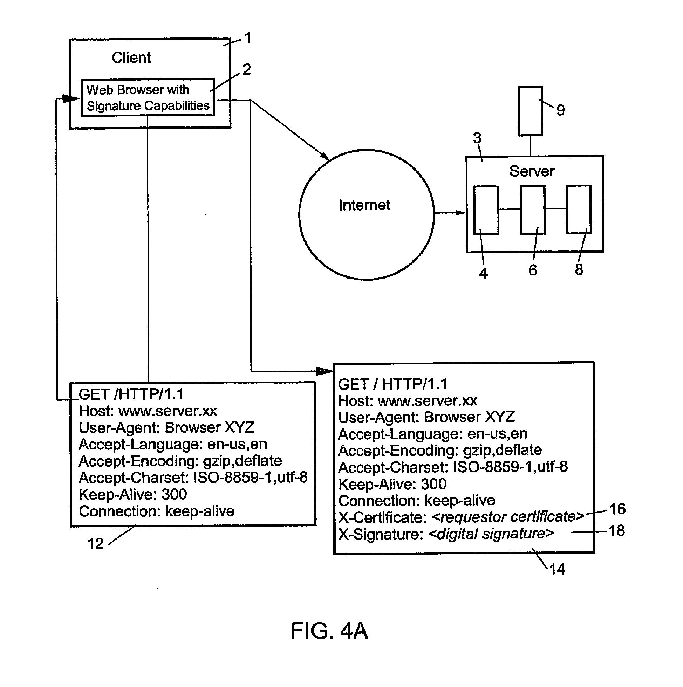

With respect to Fig.3, there is depicted the inventive structure of a HTTP-request header according to the present invention.
Following additional information according to the present invention must be included into the HTTP-request header:
the client certificate containing the public key and signed by a certification authority, and
digital signature calculated over the HTTP-request header and if available HTTP-body (Post).
The certificate and digital signature can be processed by specific tools on the server. A client certificate is a document distributed by a Trusted Third Party that binds a public key to a specific person. The Trusted Party guarantees that the information contained in the certificate is valid and correct. Certificates are standardized by 509. They should contain the digital signature of the Trusted Third party, the name of the person owning the public key, and the public key itself.
With respect to Fig.4 A-C, there are depicted preferred embodiments to insert the client certificate and the digital signature into the HTTP-request header,

With respect to Fig. 4 A, there is depicted a first embodiment of the present invention to insert Client's certificate 16 together with the digital signature 18 into the HTTP-request header 12. The client system 1 contains a browser 2 with signature capabilities. The browser 2 generates a HTTP-request header 12, accesses the client's private key which is securely stored on a local file system, encrypts a hash value generated over the HTTP-request header 12 and if available body, with the private key resulting in a digital signature 18. That digital signature 18 together with the Client certificate 16 containing the public key is inserted in the HTTP-request header 12. The extended HTTP-request header 14 is sent to the HTTP-server 4 that initiates the authentication process. The authentication component 6 which may be part of the HTTP-server or may be a separate component verifies the client certificate information 16 from the HTTP-request header. Verification can either be done by checking the certificate signature of Certification Authority or comparing it with already known certificates contained in its certification database 9. Using the public key contained in the client certificate 16, the digital signature 18 contained in the HTT-request header 12 is decrypted resulting in a hash value calculated by the client 1. Using the same hash algorithm, the hash value is calculated over the HTTP-request header 12 and body if available. If hash values match verification is completed and the authentication is successful and access to an application 8 is given.

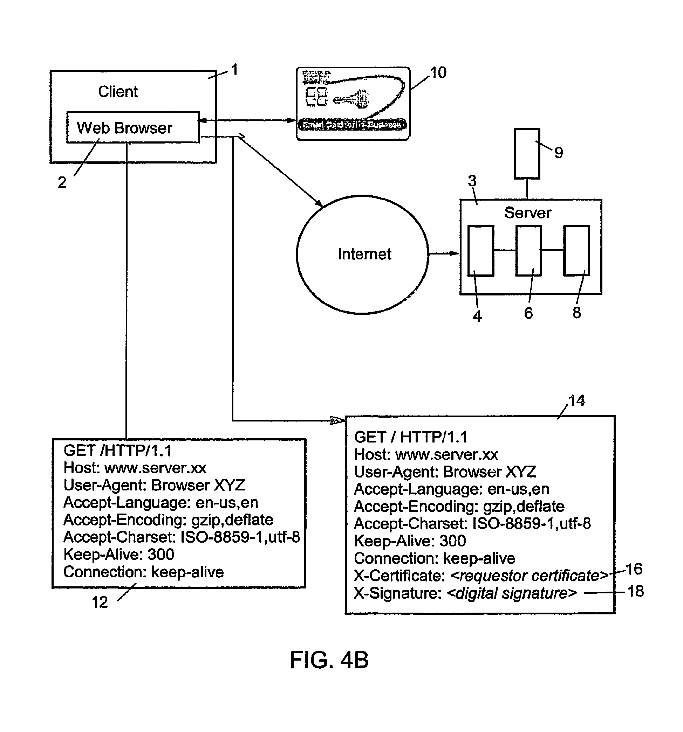

With respect to Fig.4 B, there is depicted a second embodiment of the present invention to insert Client certificate 18 together with the digital signature 16 into the HTTP-request header 12. Now the browser 2 has the functionality to communicate with a smart card 10 via a smart card reader 10. The browser 2 generates a HTTP-request header, establishes communication with the smart card 10, the smart card 10 which contains in its security module a private key and Client's certificate encrypts a hash value generated over the HTTP-header 12 and if available body, with the private key (digital signature), and returns a digital signature 18 together with client's certificate 16 to the browser 2. That digital signature 18 together with Client's certificate 16 containing the public key is inserted in the HTTP-request header 12. The extended HTTP-request header 14 is sent to the HTTP-server 4 that initiates the authentication process by using an authentication component (see description to Fig. 4 A)

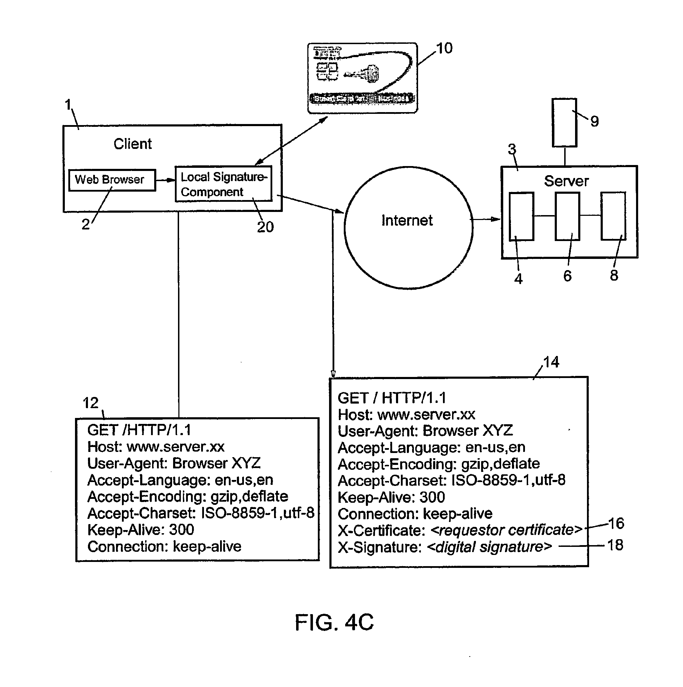

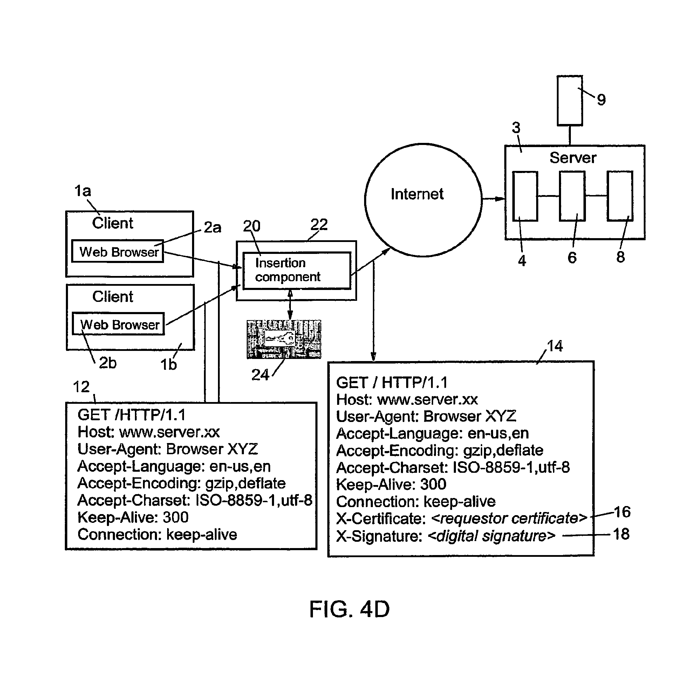

With respect to Fig.4 C, there is depicted a third embodiment of the present invention to insert Client's certificate 16 together with the digital signature 18 into the HTTP-request header 12. In the third embodiment the client system contains an own signature component 20. That component acts as a proxy server running on the same client 1 as the browser 2. The browser 2 is configured to use that proxy server 20. Because of this the browser 2 sends the regularly HTTP-request header 12 to the signature component 20 which then inserts the certificate 16 and digital signature 18 analog to the embodiments as described above. The extended HTTP-request header is sent to the HTTP-server 4 that initiates the authentication process by using an authentication component (see description to Fig.4 A).
With respect to Fig.4 D, there is depicted a fourth embodiment of the present invention to insert Client certificate 18 together with the digital signature 16 into the HTTP-request header 12. In that embodiment the client- request (la/2a; 1b/2b) is routed via a proxy server 22 having an insertion component 20. The insertion component 20 is communicating with an encryption hardware 24 containing private keys and their assigned certificates, which encrypts a hash value generated over the HTTP-request header 12 and if available body, with the private key (digital signature), and returns digital signature 18 with the client certificate 16 to the insertion component 20 inserting them into the HTTP-request header 12. The extended HTTP-request header 14 is sent to the HTTP-server 4 that initiates the authentication process by using an authentication component (see description to Fig. 4 A).

Anyway, because the present invention describes additional header data in the HTTP protocol, all combinations of existing clients and servers that are able to process the additional data in the header can work together. If one of the systems is not enabled to handle additional data everything will work as known today.

To keep the existing base of billions of installed client browsers, an additional signature software could handle the HTTP extension by acting as a proxy component on the local client machine (see Fig. 4C). Within company networks (e.g. intranet), this could even be handled by a central proxy server (Fig 4C).
Future versions of Web Browsers then may have the functionality build in (Fig 4 A). This way the transition to the new paradigm can happen over time.

The digital signature can be created using a signature smart card or any other signature hardware. Also a pure software solution with an encrypted key store on the client computer would be a possible implementation.

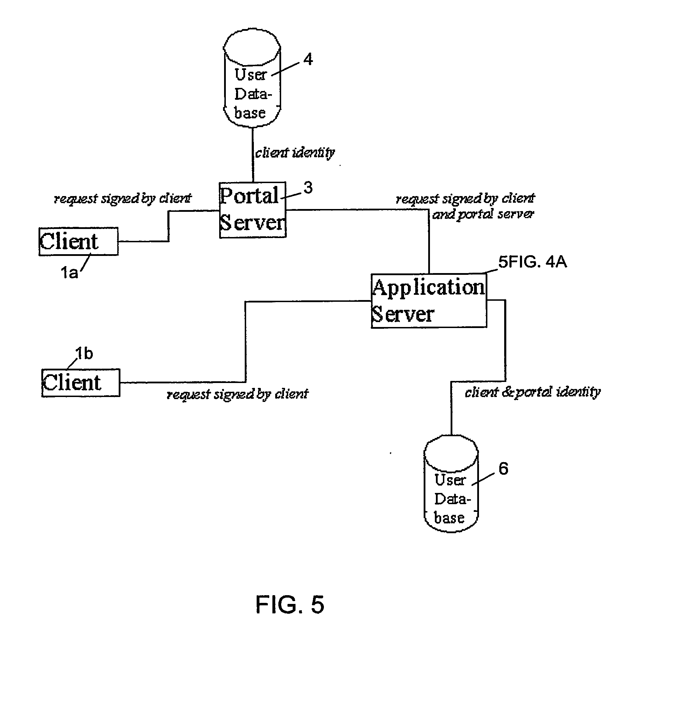

Fig.5 shows an example of a server-client communication environment using the present invention.

In this example it is assumed that an application 5 is accessed through a portal server 3. In the state of art this situation is handled by either storing the client's identity data on a server that is accessible by the portal server 3 and the application server 5 (e.g. Microsoft's® .NET Passport) or the identity data for the application server needs to be stored on the portal server 3. Both approaches require the user to have his/her data stored on a third party system which is subject to many security issues.

By digitally signing the request as explained in Fig.4 A-D, no server needs to store the user data. The portal server 3 can check the identity of the requester against its user database 4, passing the request along to the application server 5 which can do the same using its user database 6. Client 1 a accesses the application server 5 through the portal server 3 while Client 1 b can access the application server 5 directly. The application server 5 can use its own user database 6 to retrieve profile information for the user.

The approach even provides higher security since the application server 5 might want to handle only those requests that passed the portal server 3. In this case the portal server 3 forwards the request and additionally signs it. This enables the application server 5 to verify both signatures in order to either grant or deny access to its services. Client 1a would gain access to the application server 5 while Client 1b would not be served because its request does not go through the portal server 3.

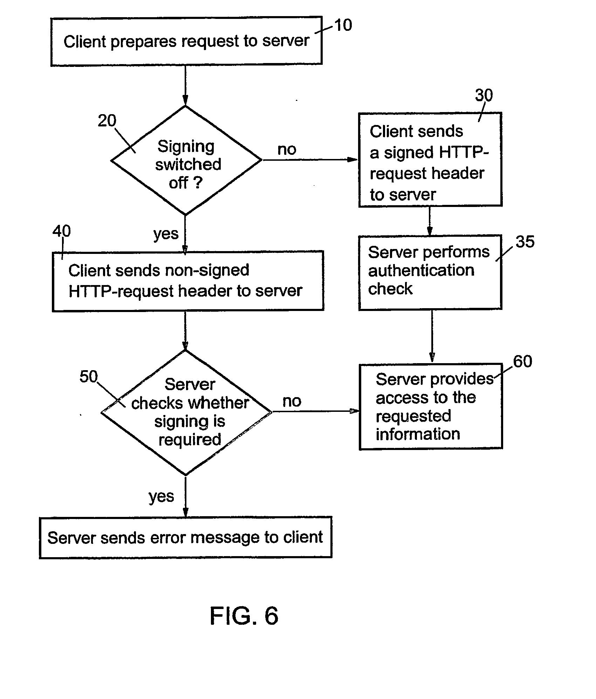

With respect to Fig.6, there is depicted the authentication a data flow according to the present invention.
Client's browser prepares request to the server 10. In a preferred embodiment of the present invention it will be checked whether signing of the HTTP-request header is switched on 20. If not, Client's browser will send a non-signed request to the server 40 and the server checks whether signing is required 50. If signing is required server will send an error message to the client 50. If signing is not required the server will provide access to the desired information 60.

If signing is switched on the client's browser inserts certificate and digital signature into the HTTP-request header, and sends that HTTP-request header to the server 30. By appending the extra fields to the HTTP header request header the server is able to retrieve the requester's identity from the certificate (authentication) 35. The Client's certificate contains the requester's name and public key.

Because it is signed by a trusted authority, the server is able to verify that it is a valid certificate issued by the trusted authority. Verification that the message has been really sent by the owner of the certificate is possible, because only the owner of the private key belonging to the certificate can have generated the digital signature value in the HTTP-request header which has been calculated over the HTTP-request header data and can be verified through the use of the public key contained in the certificate. If the authentication has been successful, the server provides access to the requested data 60.

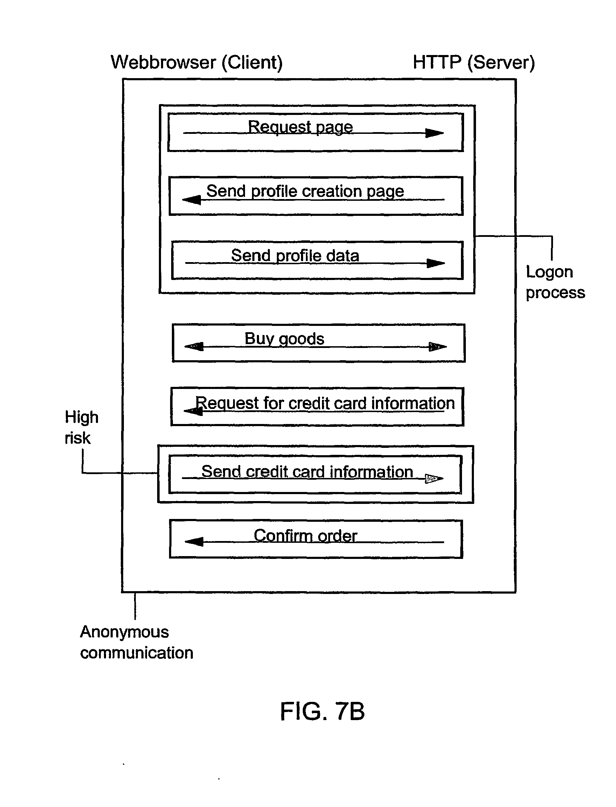

With respect to Fig.7 A, B, there are depicted typical scenarios of the exchange of information between Web browser (client) and Web server (server) using the prior art authentication process in comparison with the inventive authentication process of the present invention.

For example, during a purchase process, the client receives and sends data (e.g. a series of text or html pages or blocks of formatted data like XML) from and to the server representing the online shopping system until the order gets confirmed by a specific data transfer operation (e.g. HTTP Post). In today's applications, the server issues a request to obtain a user Id and password from the client during this process. The user has to supply these data manually before they are sent to the server by the client application (see Fig.7A).
In an application corresponding to the present invention (see Fig.7 B), the client signs the HTTP-request header data being sent to the server by means of a digital signature. The server easily identifies the client by checking the signature. It's therefore not necessary to request and supply the user Id and password, since every data item transmitted is associated with the user's identity. The server may retrieve stored information for this client and use this information in preparing the data which is to be sent to the client ("personalization", profile creation page). Examples for data used for personalization are the user's address (where should the ordered items be delivered to), the users shopping history, the users shopping cart, the web pages visited during the last sessions etc.
By checking the identity of the user (which can be done at any time during the flow), the server may find out that the user never visited this site before. The server may then send data containing a request to specify preferences and detailed user data (profile creation page). The user supplies these data, the client application sends it to the server and the server stores these data used for personalization in its data base. Since every data transfer is signed, the user ID of the client is known to the server as soon as the client visits the first page. The personalization may therefore take place early during the process.
When the user chooses to switch off signing, the server recognizes this fact and may send a page containing an indication to switch on signing or might use traditional user ID / password scenarios instead (not shown).

## Claims

1. Method for authenticating clients in a client-server environment, wherein said client-server environment uses a communication protocol that allows extensions of the header request without violating said communication protocol, wherein at said client side, the method comprises the steps of:
generating a header request(10),
inserting client authentication information into said header request resulting in an extended header request (20) independently of the authentication process used by said server and without server requesting authentication information, wherein said authentication information comprises the client certificate containing client's name and client public key, and a digital signature which has been generated over a hash value of the header request including client certificate using Client private key,
sending said extended header request to a server (30),
and receiving information from said server if authentication has been successful (35,60).

2. Method according to claim 1, wherein said communication protocol is a HTTP-protocol.

3. Method according to claim 1, wherein said authentication information is included in the first header request for establishing a session with said server.

4. Method according to claim 1, wherein said authentication information is automatically inserted into said header request by the Client's browser.

5. Method according to claim 4, wherein said client browser receives said authentication information from a smart card (10) via a smart card reader.

6. Method according to claim 1, wherein said authentication information is automatically inserted into said header request by a client signature component (20) which receives said authentication information from a smart card (10) via a smart card reader.

7. Method for authenticating clients (1a, 1b) in a client-server environment, wherein said client-server environment uses a communication protocol that allows extensions of the header request without violating said communication protocol, wherein a system (22) establishes communication between said client (1a, 1b) and said server (3) , wherein at said system, said method comprises the steps of:
receiving a header request from said client (1a, 1b),
inserting authentication information into said header request resulting in an extended header request(20) independently of the authentication process used by said server and without server requesting authentication information, wherein said authentication information comprises the client certificate containing client's name and client's public key, and a digital signature which has been generated over the whole header request including client certificate using Client's private key,
sending said extended header request to a server (3), and
receiving information from said server (3), if the authentication has been successful.

8. Method according to claim 7, wherein said system (20) can be a proxy server, a gateway.

9. Method according to claim 7, wherein said communication protocol is the HTTP-protocol, and said authentication information is automatically inserted into said HTTP-request header by said an insertion component (20) which receives said authentication information from a signature component (24).

10. Method for authenticating clients in a client-server environment, wherein said client-server environment uses a communication protocol that allows extensions of the header request without violating said communication protocol, wherein at said server side said method comprises the steps of:
receiving a client header request containing authentication information, wherein said authentication information comprises the client certificate containing client's name and client's public key, and a digital signature which has been generated over the whole header request including client certificate using Client's private key,
validating said authentication information contained in said header request by said-server authentication component, and
providing information to said client, if the authentication has been successful.

11. Method according to claim 10, wherein said communication protocol is the HTTP-protocol, and said authentication component performs the steps of:
accessing said public key contained in the client certificate, decrypting said digital signature contained in the HTTP-request header with said public key resulting in a hash value,
applying the same hash algorithm as used by said client to said HTTP-request header, and
considering authentication as successful, if both hash values match.

12. Server System (3) for authenticating clients (1) in a client-service environment, wherein said client-server environment uses a communication protocol that allows extensions of the header request without violating said communication protocol, wherein said client (1) provides authentication information in the header request to said server system, said server system (3) comprising:
an authentication component (4) with the functionality to read said authentication information contained in the incoming client header request, wherein said authentication information comprises the client certificate containing client's name and
client's public key, and a digital signature which has been generated over the whole header request including client certificate using Client's private key, and to validate said authentication information without having requested said authentication information from said client.

13. Client System (1) to be authenticated by a server system in client-server environment, wherein said client-server environment uses a communication protocol that allows extensions of the header request without violating said communication protocol, said client system comprising:
a browser (2), and
a component for inserting client authentication information into said header request independently of the authentication process used by said server and without server requesting authentication information, wherein said authentication information comprises the client certificate containing client's name and client's public key, and a digital signature which has been generated over the hash value of the header request content using Client's private key.

14. Client System according to claim 13, further comprising a smart card reader (10), and
a smart card (10) with a security module containing client's private key and a client certificate containing client name and private key, wherein said smart card provides said certificate together with a digital signature to said inserting component,
wherein said digital signature is the result of an encryption of a hash value of said header request containing said certificate information by means of said private key.

15. Proxy Server system (22) for providing client authentication information to a server system (3), wherein said proxy server system (22) has a communication connection with a client system (1a, 1b) and a server system (3), wherein said communication protocol used between said systems allows extensions of the header request of said header request without violating said communication protocol, said proxy server system (22) comprising:
a proxy insertion component (20) for inserting the client certificate and digital signature into the header request received from said client independently of the authentication process used by said server and without server requesting authentication information, and
a signature component (24) for creating a digital signature and for providing it together with said client certificate to said proxy insertion component (20).

16. Computer program product stored in the internal memory of a digital computer, containing parts of software code to execute the method in accordance with any of claims 1-11 if the product is run on the computer.

## Patentansprüche

1. Verfahren zur Berechtigungsüberprüfung von Clients in einer Client-Server-Umgebung, wobei die Client-Server-Umgebung ein Übertragungsprotokoll verwendet, das Erweiterungen der Vorsatzanforderung ohne Verletzung des Übertragungsprotokolls ermöglicht, wobei das Verfahren auf der Clientseite die folgenden Schritte umfasst:
Erzeugen einer Vorsatzanforderung (10),
Einfügen von Client-Berechtigungsüberprüfungsdaten in die Vorsatzanforderung, was zu einer erweiterten Vorsatzanforderung (20) führt, unabhängig von dem vom Server verwendeten Berechtigungsüberprüfungsprozess und ohne Anforderung von Berechtigungsüberprüfungsdaten durch den Server, wobei die Berechtigungsüberprüfungsdaten das den Namen des Client und den öffentlichen Schlüssel des Client enthaltende Client-Zertifikat sowie eine digitale Signatur umfassen, die über einen Hash-Wert der das Client-Zertifikat enthaltenden Vorsatzanforderung unter Verwendung des privaten Schlüssels des Client erzeugt wurde,
Übertragen der erweiterten Vorsatzanforderung an einen Server (30), und
Empfangen von Daten vom Server, falls die Berechtigungsüberprüfung erfolgreich war (35, 60).

2. Verfahren nach Anspruch 1, wobei das Übertragungsprotokoll ein HTTP-Protokoll ist.

3. Verfahren nach Anspruch 1, wobei die Berechtigungsüberprüfungsdaten in der ersten Vorsatzanforderung zur Einrichtung einer Sitzung mit dem Server enthalten sind.

4. Verfahren nach Anspruch 1, wobei die Berechtigungsüberprüfungsdaten vom Browser des Client automatisch in die Vorsatzanforderung eingefügt werden.

5. Verfahren nach Anspruch 4, wobei der Client-Browser die Berechtigungsüberprüfungsdaten über ein Chipkartenlesegerät von einer Chipkarte (10) empfängt.

6. Verfahren nach Anspruch 1, wobei die Berechtigungsüberprüfungsdaten von einer Client-Signaturkomponente (20), die die Berechtigungsüberprüfungsdaten über ein Chipkartenlesegerät von einer Chipkarte (10) empfängt, automatisch in die Vorsatzanforderung eingefügt werden.

7. Verfahren zur Berechtigungsüberprüfung von Clients (1a, 1b) in einer Client-Server-Umgebung, wobei die Client-Server-Umgebung ein Übertragungsprotokoll verwendet, das Erweiterungen der Vorsatzanforderung ohne Verletzung des Übertragungsprotokolls ermöglicht, wobei ein System (22) einen Datenaustausch zwischen dem Client (1a, 1b) und dem Server (3) einrichtet, wobei das Verfahren im System die folgenden Schritte umfasst:
Empfangen einer Vorsatzanforderung vom Client (1a, 1b), Einfügen von Berechtigungsüberprüfungsdaten in die Vorsatzanforderung, was zu einer erweiterten Vorsatzanforderung (20) führt, unabhängig von dem vom Server verwendeten Berechtigungsüberprüfungsprozess und ohne Anforderung von Berechtigungsüberprüfungsdaten durch den Server, wobei die Berechtigungsüberprüfungsdaten das den Namen des Client und den öffentlichen Schlüssel des Client enthaltende Client-Zertifikat sowie eine digitale Signatur umfassen, die über die gesamte das Client-Zertifikat enthaltende Vorsatzanforderung unter Verwendung des privaten Schlüssels des Client erzeugt wurde,
Übertragen der erweiterten Vorsatzanforderung an einen Server (30), und
Empfangen von Daten vom Server (3), falls die Berechtigungsüberprüfung erfolgreich war.

8. Verfahren nach Anspruch 7, wobei das System (20) ein Proxy-Server oder ein Gateway sein kann.

9. Verfahren nach Anspruch 7, wobei das Übertragungsprotokoll das HTTP-Protokoll ist und die Berechtigungsüberprüfungsdaten von einer Einfügungskomponente (20), die die Berechtigungsüberprüfungsdaten von einer Signaturkomponente (24) empfängt, automatisch in den HTTP-Anforderungsvorsatz eingefügt werden.

10. Verfahren zur Berechtigungsüberprüfung von Clients in einer Client-Server-Umgebung, wobei die Client-Server-Umgebung ein Übertragungsprotokoll verwendet, das Erweiterungen der Vorsatzanforderung ohne Verletzung des Übertragungsprotokolls ermöglicht, wobei das Verfahren auf der Serverseite die folgenden Schritte umfasst:
Empfangen einer Berechtigungsüberprüfungsdaten enthaltenden Client-Vorsatzanforderung, wobei die Berechtigungsüberprüfungsdaten das den Namen des Client und den öffentlichen Schlüssel des Client enthaltende Client-Zertifikat sowie eine digitale Signatur umfassen, die über die gesamte das Client-Zertifikat enthaltende Vorsatzanforderung unter Verwendung des privaten Schlüssels des Client erzeugt wurde,
Überprüfen der in der Vorsatzanforderung enthaltenen Berechtigungsüberprüfungsdaten durch die Server-Berechtigungsüberprüfungskomponente, und
Übertragen von Daten an den Client, wenn die Berechtigungsüberprüfung erfolgreich war.

11. Verfahren nach Anspruch 10, wobei das Übertragungsprotokoll das HTTP-Protokoll ist und die Berechtigungsüberprüfungskomponente die folgenden Schritte ausführt:
Zugreifen auf den im Client-Zertifikat enthaltenen öffentlichen Schlüssel,
Entschlüsseln der im HTTP-Anforderungsvorsatz enthaltenen digitalen Signatur mit dem öffentlichen Schlüssel, woraus sich ein Hash-Wert ergibt,
Anwenden desselben Hash-Algorithmus, wie er vom Client verwendet wurde, auf den HTTP-Anforderungsvorsatz, und
Betrachten der Berechtigungsüberprüfung als erfolgreich, wenn beide Hash-Werte übereinstimmen.

12. Serversystem (3) zur Berechtigungsüberprüfung von Clients (1) in einer Client-Server-Umgebung, wobei die Client-Server-Umgebung ein Übertragungsprotokoll verwendet, das Erweiterungen der Vorsatzanforderung ohne Verletzung des Übertragungsprotokolls ermöglicht, wobei der Client (1) Berechtigungsüberprüfungsdaten in der Vorsatzanforderung an das Serversystem überträgt, wobei das Serversystem (3) Folgendes umfasst:
eine Berechtigungsüberprüfungskomponente (4) mit der Funktionalität zum Lesen der in der eingehenden Client-Vorsatzanforderung enthaltenen Berechtigungsüberprüfungsdaten, wobei die Berechtigungsüberprüfungsdaten das den Namen des Client und den öffentlichen Schlüssel des Client enthaltende Client-Zertifikat sowie eine digitale Signatur umfassen, die über die gesamte das Client-Zertifikat enthaltende Vorsatzanforderung unter Verwendung des privaten Schlüssels des Client erzeugt wurde, und zum Überprüfen der Berechtigungsüberprüfungsdaten, ohne dass die Berechtigungsüberprüfungsdaten vom Client angefordert wurden.

13. Clientsystem (1), dessen Identität von einem Serversystem in einer Client-Server-Umgebung überprüft werden muss, wobei die Client-Server-Umgebung ein Übertragungsprotokoll verwendet, das Erweiterungen der Vorsatzanforderung ohne Verletzung des Übertragungsprotokolls ermöglicht, wobei das Clientsystem Folgendes umfasst:
einen Browser (2), und
eine Komponente zum Einfügen von Client-Berechtigungsüberprüfungsdaten in die Vorsatzanforderung unabhängig von dem vom Server verwendeten Berechtigungsüberprüfungsprozess und ohne Anforderung von Berechtigungsüberprüfungsdaten durch den Server, wobei die Berechtigungsüberprüfungsdaten das den Namen des Client und den öffentlichen Schlüssel des Client enthaltende Client-Zertifikat sowie eine digitale Signatur umfassen, die über den Hash-Wert des Vorsatzanforderungsinhaltes unter Verwendung des privaten Schlüssels des Client erzeugt wurde.

14. Clientsystem nach Anspruch 13, das außerdem Folgendes umfasst:
ein Chipkartenlesegerät (10), und
eine Chipkarte (10) mit einem Sicherheitsmodul, das den privaten Schlüssel des Client sowie ein den Namen und den privaten Schlüssel des Client enthaltendes Client-Zertifikat enthält, wobei die Chipkarte das Zertifikat zusammen mit einer digitalen Signatur an die Einfügungskomponente überträgt, wobei die digitale Signatur das Ergebnis einer Verschlüsselung eines Hash-Wertes der die Zertifikatdaten enthaltenden Vorsatzanforderung mittels des privaten Schlüssels ist.

15. Proxy-Serversystem (22) zum Übertragen von Client-Berechtigungsüberprüfungsdaten an ein Server-System (3), wobei das Proxy-Serversystem (22) eine Datenübertragungsverbindung mit einem Clientsystem (1a, 1b) und einem Serversystem (3) aufweist, wobei das zwischen den Systemen verwendete Übertragungsprotokoll Erweiterungen der Vorsatzanforderung ohne Verletzung des Übertragungsprotokolls ermöglicht, wobei das Proxy-Serversystem (22) Folgendes umfasst:
eine Proxy-Einfügungskomponente (20) zum Einfügen des Client-Zertifikats und einer digitalen Signatur in die vom Client empfangene Vorsatzanforderung unabhängig von dem vom Server verwendeten Berechtigungsüberprüfungsprozess und ohne Anforderung von Berechtigungsüberprüfungsdaten durch den Server, und
eine Signaturkomponente (24) zum Erzeugen einer digitalen Signatur und zum Übertragen derselben zusammen mit dem Client-Zertifikat an die Proxy-Einfügungskomponente (20).

16. Im internen Speicher eines digitalen Computers gespeichertes Computerprogrammprodukt, das Teile eines Softwarecodes zum Ausführen des Verfahrens nach irgendeinem der Ansprüche 1 bis 11 enthält, wenn das Produkt im Computer ausgeführt wird.

## Revendications

1. Procédé d'authentification de clients, dans un environnement client-serveur, dans lequel ledit environnement client-serveur utilise un protocole de communication, permettant des extensions de la requête d'en-tête sans violation dudit protocole de communication, dans lequel, audit côté client, le procédé comprend les étapes consistant à :
générer une requête d'en-tête (10),
insérer une information d'authentification de client dans ladite requête d'en-tête, entraînant la production d'une requête d'en-tête (20) étendue, indépendant du processus d'authentification utilisé par ledit serveur et sans que le serveur demande une information d'authentification, dans lequel ladite information d'authentification comprend le certificat client, contenant le nom du client et la clé publique de client, et une signature numérique ayant été générée sur une valeur de hachage de la requête d'en-tête, incluant un certificat de client utilisant une clé privée de Client,
envoyer ladite requête d'en-tête étendue à un serveur (30),
et recevoir, de la part dudit serveur, une information disant si l'authentification a été couronnée de succès (35, 60).

2. Procédé selon la revendication 1, dans lequel ledit protocole de communication est un protocole http.

3. Procédé selon la revendication 1, dans lequel ladite information d'authentification est incluse dans la première requête d'en-tête, pour établir une sélection avec ledit serveur.

4. Procédé selon la revendication 1, dans lequel ladite information d'authentification est insérée automatiquement dans ladite requête d'en-tête par le navigateur du Client.

5. Procédé selon la revendication 4, dans lequel ledit navigateur client reçoit ladite information d'authentification de la part d'une carte à mémoire (10), via un lecteur de carte mémoire.

6. Procédé selon la revendication 1, dans lequel ladite information d'authentification est insérée automatiquement dans ladite requête d'en-tête, par un composant de signature client (20) qui reçoit ladite information d'authentification de la part d'une carte à mémoire (10), via un lecteur de carte à mémoire.

7. Procédé d'authentification de clients (1a, 1b), dans un environnement client-serveur, dans lequel ledit environnement client-serveur utilise un protocole de communication permettant des extensions de la requête d'en-tête sans violation dudit protocole de communication, dans lequel un système (22) établit une communication entre ledit client (1a, 1b) et ledit serveur (3), dans lequel audit système, ledit procédé comprend les étapes consistant à :
recevoir une requête d'en-tête provenant dudit client (1a), 1b),
insérer une information d'authentification dans ladite requête d'en-tête, entraînant la production d'une requête d'en-tête (20) étendue, indépendant du processus d'authentification utilisé par ledit serveur et sans que le serveur demande une information d'authentification, dans lequel ladite information d'authentification comprend le certificat client, contenant le nom du client et la clé publique de client, et une signature numérique, ayant été générée sur la totalité de la requête d'en-tête, incluant un certificat client en utilisant une clé privée de Client,
envoyer ladite requête d'en-tête étendue à un serveur (3), et
recevoir, de la part dudit serveur (3), une information, si l'authentification a été couronnée de succès.

8. Procédé selon la revendication 7, dans lequel ledit système (20) peut être un serveur de proche voisinage, une passerelle.

9. Procédé selon la revendication 7, dans lequel ledit protocole de communication est le protocole http, et ladite information d'authentification est insérée automatiquement dans ladite en-tête de requête http, par ledit composant d'insertion (20), recevant ladite information d'authentification de la part d'un composant de signature (24).

10. Procédé d'authentification de clients, dans un environnement client-serveur, dans lequel ledit environnement client-serveur utilise un protocole de communication permettant des extensions de la requête d'en-tête sans violation dudit protocole de communication, dans lequel au côté dudit serveur, ledit procédé comprend les étapes consistant à :
recevoir une requête d'en-tête de client contenant une information d'authentification, dans lequel ladite information d'authentification comprend le certificat client contenant le nom de client et la clé publique de client, et une signature numérique, ayant été générée sur la totalité de la requête d'en-tête, incluant un certificat client, par utilisation de la clé privée du Client,
valider ladite information d'authentification contenue dans ladite requête d'en-tête par ledit composant d'authentification de serveur, et
fournir une information audit client, si l'authentification a été couronnée de succès.

11. Procédé selon la revendication 10, dans lequel ledit protocole de communication est le protocole http, et ledit composant d'authentification exécute les étapes consistant à :
accéder à ladite clé publique contenue dans le certificat client,
déchiffrer ladite signature numérique contenue dans l'en-tête de requête http avec ladite clé publique, donnant une valeur de hachage,
appliquer le même algorithme de hachage, tel qu'utilisé par ledit client, à ladite en-tête de requête http, et
considérer l'authentification comme ayant été couronnée de succès, si les deux valeurs de hachage coïncident.

12. Système de serveur (3) pour l'authentification de clients (1) dans un environnement client-serveur, dans lequel ledit environnement client-serveur utilise un protocole de communication permettant des extensions de la requête d'en-tête sans violation dudit protocole de communication, dans lequel ledit client (1) fournit une information d'authentification dans la requête d'en-tête audit système serveur, ledit système serveur (3) comprenant :
un composant d'authentification (4) ayant la fonctionnalité de lire ladite information d'authentification contenue dans la requête d'en-tête de client entrante, dans lequel ladite information d'authentification comprend le certificat client contenant le nom de client et la clé publique de client, et une signature numérique ayant été générée sur la totalité de la requête d'en-tête, incluant le certificat client, par utilisation de la clé privée du Client, et la validation de ladite information d'authentification sans avoir demandé ladite information, d'authentification de la part dudit client.

13. Système client (1) devant être authentifié par un système serveur dans un environnement client-serveur, dans lequel ledit environnement client-serveur utilise un protocole de communication permettant des extensions de la requête d'en-tête sans violation dudit protocole de communication, ledit système client comprenant :
un navigateur (2), et
un composant, pour insertion d'une information d'authentification de client dans la requête d'en-tête, indépendamment du processus d'authentification utilisé par ledit serveur et sans que le serveur demande d'information d'authentification, dans lequel ladite information d'authentification comprend le certificat client contenant le nom du client et la clé publique de client, et une signature numérique ayant été générée sur la valeur de hachage du contenu de requête d'en-tête, par utilisation de la clé privée du Client.

14. Système client selon la revendication 13, comprenant en outre :
un lecteur de carte à mémoire (10), et
une carte à mémoire (10), avec un module de sécurité, contenant la clé privée du client, et un certificat de client, contenant le nom du client et un clé privée, dans lequel ladite carte à mémoire fournit ledit certificat, conjointement avec une signature numérique audit composant d'insertion, dans lequel ladite signature numérique est le résultat d'un chiffrement d'une valeur de hachage de ladite requête d'en-tête contenant ladite information de certificat, au moyen de ladite clé privée.

15. Système serveur de proche voisinage (22) pour fourniture d'une information d'authentification de clients à un système serveur (3), dans lequel ledit système serveur de proche voisinage (22) présente une connexion de communication avec un système client (1a, 1b) et un système serveur (3), dans lequel ledit protocole de communication utilisé entre lesdits systèmes permet des extensions de la requête d'en-tête de ladite requête d'en-tête, sans violation dudit protocole de communication, ledit système serveur de proche voisinage (22) comprenant :
un composant d'insertion de proche voisinage (20), pour insertion du certificat client et de la signature numérique dans la requête d'en-tête ayant été reçue dudit client, indépendamment du processus d'authentification utilisé par ledit serveur et sans que le serveur demande d'information d'authentification, et
un composant de signature (24) pour créer une signature numérique et pour la fournir, conjointement avec ledit certificat de client, audit composant d'insertion de proche voisinage (20).

16. Produit de programme pour ordinateur, stocké dans la mémoire interne d'un ordinateur numérique, contenant des parties de code logiciel pour exécuter le procédé selon l'une quelconque des revendications 1 à 11, si le produit est en fonctionnement sur l'ordinateur.
